(19) Europäisches Patentamt / European Patent Office / Office européen des brevets

(11) **EP 3 654 524 B1**

(12) **EUROPÄISCHE PATENTSCHRIFT**

(45) Veröffentlichungstag und Bekanntmachung des Hinweises auf die Patenterteilung:
**05.01.2022** **Patentblatt 2022/01**

(51) Int Cl.:
*H02P 27/08* *(2006.01)* *H02P 21/00* *(2016.01)*
*H02P 21/14* *(2016.01)* *H02M 7/5387* *(2007.01)*
*H02M 7/5395* *(2006.01)*

(21) Anmeldenummer: **18206341.2**

(22) Anmeldetag: **14.11.2018**

(54) **VERFAHREN UND STEUEREINHEIT ZUM BETRIEB EINES ELEKTROMOTORS**

METHOD AND DEVICE FOR OPERATING AN ELECTRIC MOTOR

PROCÉDÉ ET UNITÉ DE COMMANDE DESTINÉS AU FONCTIONNEMENT D'UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020** **Patentblatt 2020/21**

(73) Patentinhaber: **Bayerische Motoren Werke Aktiengesellschaft**
**80809 München (DE)**

(72) Erfinder:
• **Reuss, Joerg**
**85716 Unterschleissheim (DE)**
• **Birda, Athina**
**80799 München (DE)**

(56) Entgegenhaltungen:
**DE-T5-112017 000 892**    **US-A1- 2018 131 266**
**US-A1- 2018 309 399**

• **YUAN GUOFENG ET AL: "Multi-Mode PWM Scheme for Locomotive Traction", 2018 21ST INTERNATIONAL CONFERENCE ON ELECTRICAL MACHINES AND SYSTEMS (ICEMS), KIEE EMECS (KIEE ELECTRICAL MACHINERY AND ENERGY CONVERSION SYSTEMS), 7. Oktober 2018 (2018-10-07), Seiten 1357-1362, XP033459710, DOI: 10.23919/ICEMS.2018.8549058 [gefunden am 2018-11-27]**

EP 3 654 524 B1

## Beschreibung

eines Elektromotors. Insbesondere betrifft die Erfindung ein Verfahren zur Ermittlung von Messwerten der Phasenströme bei der Steuerung und/oder Regelung eines Elektromotors. Ein zumindest teilweise elektrisch angetriebenes Fahrzeug und/oder Flugzeug umfasst einen Elektromotor, der mittels eines mehrphasigen Stroms, insbesondere mittels eines Drehstroms, betrieben werden kann. Der mehrphasige Strom kann dabei aus einer Gleichspannung mittels eines Wechselrichters generiert werden. Die Schaltelemente des Wechselrichters können mit bestimmten Pulsmustern angesteuert werden, um aus einer Gleichspannung eine mehrphasige Wechselspannung zu erzeugen. Die unterschiedlichen Phasenspannungen der mehrphasigen Wechselspannung werden an unterschiedliche Statorwindungen des Elektromotors angelegt, und bewirken so eine Drehung des Rotors und der Welle des Elektromotors mit einer bestimmten Drehgeschwindigkeit und/oder mit einem bestimmten Drehmoment.

Um Schaltverluste der Schaltelemente des Wechselrichters zu reduzieren, werden bevorzugt Pulsmuster mit relativ geringen Schaltfrequenzen verwendet. Um auch bei relativ niedrigen Schalt-bzw. Modulationsfrequenzen Phasenströme mit qualitativ hochwertigen Wellenformen für die unterschiedlichen Phasen des Elektromotors (insbesondere mit relativ geringen Oberwellenanteilen) bereitzustellen, kann eine Regelung der verwendeten Pulsmuster und/oder der verwendeten Schaltzeitpunkte bzw. Schaltwinkel der Schaltelemente in Abhängigkeit von den gemessenen Ist-Phasenströmen des Elektromotors, insbesondere in Abhängigkeit von der Grundwelle bzw. Grund-Komponente der Ist-Phasenströme, erfolgen.

US 2018/0309399 A1 beschreibt ein Verfahren zur Messung des Stroms eines Elektromotors ohne Alias-Effekt. Yuan Guofeng et al. "Multi-Mode PWM Scheme for Locomotive Traction", 2018 21st International Conference on Electrical Machines and Systems (ICEMS), October 7-10, 2018, Jeju, Korea, beschreibt eine Method zur Ermittlung der Schaltwinkel zur Ansteuerung eines Elektromotors. DE 11 2017 000 892 T5 beschreibt ein Verfahren zur Auswahl eines Schaltmusters für einen Wechselrichter eines Elektromotors.

Das vorliegende Dokument befasst sich mit der technischen Aufgabe, die Grundwelle bzw. die Grund-Komponente der Phasenströme eines Elektromotors in effizienter und präziser Weise zu ermitteln. Des Weiteren befasst sich das vorliegende Dokument mit der technischen Aufgabe, einen Elektromotor in energie- und kosteneffizienter sowie in präziser Weise zu betreiben, insbesondere in synchroner Weise zu steuern.

Die Aufgabe wird jeweils durch die unabhängigen Ansprüche 1, 2, 13, 14 gelöst. Vorteilhafte

Ausführungsformen werden u.a. in den abhängigen Ansprüchen beschrieb

Gemäß einem Aspekt wird eine Steuereinheit zum Betrieb eines Elektromotors beschrieben. Die Steuereinheit kann eingerichtet sein, die Schaltelemente (insbesondere die Transistoren, etwa IGBT und/oder MOS Transistoren) eines Wechselrichters anzusteuern, um Phasenspannungen für unterschiedliche Windungen des Elektromotors zu generieren (z.B. um Phasenspannungen aus einer Gleichspannung zu generieren). Dabei können die Phasenspannung derart generiert werden, dass der Elektromotor ein bestimmtes Drehmoment stellt und/oder eine bestimmte Dreh- bzw. Winkelgeschwindigkeit aufweist.

Der Elektromotor kann z.B. einen Stator und einen Rotor umfassen. Es können dann durch die Steuereinheit unterschiedliche Phasenspannungen an und/oder unterschiedliche Phasenströme durch unterschiedliche Windungen des Stators des Elektromotors bewirkt werden. Dabei können insbesondere eine dreiphasige Phasenspannung bzw. ein dreiphasiger Phasenstrom (insbesondere ein Drehstrom) bewirkt werden. Der Elektromotor kann z.B. ein bürstenloser Gleichstrommotor oder eine Drehstrom-Synchronmaschine oder eine Asynchronmaschine sein.

Die Steuereinheit ist eingerichtet, Werte von unterschiedlichen Phasenströmen des Elektromotors für 2Z unterschiedliche Abtastwinkel zu ermitteln, wobei $Z$ eine ganze Zahl ist, mit $Z$ gleich eins oder größer als eins. Für zumindest zwei Phasen des mehrphasigen Stroms werden jeweils 2Z Abtastwerte für die entsprechenden 2Z unterschiedlichen Abtastwinkel ermittelt. Zu diesem Zweck kann eine Strom-Messeinheit (z.B. mit einem Messwiderstand) verwendet werden, um Abtastwerte eines Phasenstroms einer Phase zu erfassen.

Der mit einer Winkelgeschwindigkeit $\omega_r$ drehende Rotor des Elektromotors weist typischerweise die Winkelpositionen $\theta_r = \omega_r t$ auf (wobei t die Zeit ist). Es können Abtastwerte eines Phasenstroms für 2Z unterschiedliche Winkelpositionen bzw. Abtastwinkel $\theta_r$ ermittelt werden.

Die Abtastwinkel können derart ausgewählt werden, dass ein oder mehrere Paare der 2Z Abtastwinkel um jeweils einen Abstandwinkel von $\pi/_{6z}$ voneinander beabstandet sind, wobei z eine ganze Zahl ist, mit z gleich eins oder größer als eins. Die Abtastwinkel können somit eine definierte Positionierung zueinander aufweisen. Insbesondere kann ein Paar von Abtastwinkeln mit einem Abstandwinkel von $\pi/_6$ (insbesondere bei Z = 1) oder mit einem Abstandswinkel von $\pi/_{12}$ (insbesondere bei Z = 2) voneinander beabstandet sein.

Durch die winkelsynchrone Abtastung der Phasenströme kann in zuverlässiger und präziser Weise bewirkt werden, dass sich Oberwellen bzw. harmonische Komponenten der Phasenströme paarweise aufheben. Als Folge daraus kann die Güte eines Schätzwertes für eine Grund-Komponente (insbesondere für eine Grundwelle) der Phasenströme erhöht werden (da Verzerrungen aufgrund von Oberwellen reduziert werden können). Insbesondere kann durch eine derartige winkelsynchrone Abtastung der Phasenströme auf eine umfangreiche Tiefpass-Filterung der Phasenströme zur Ermittlung eines Schätzwertes für die Grund-Komponente verzichtet werden. Außerdem kann der Schätzwert für die Grund-Komponente der Phasenströme in analoger Weise für unterschiedliche Typen von Elektromotoren ermittelt werden (so dass keine aufwändige Anpassung an individuelle Elektromotoren erforderlich ist).

In einem bevorzugten Beispiel ist Z = z, und in einem besonders bevorzugten Beispiel ist Z = 2. Durch diese Parameterwahl können in präziser Weise alle Oberwellen bis zu der 24. Ordnung eliminiert werden. Insbesondere können durch diese Parameterwahl alle Oberwellen außer der 24. Ordnung und deren ganzzahligen Vielfachen eliminiert werden.

Die 2Z unterschiedlichen Abtastwinkel können ggf. innerhalb einer einzigen Halbwelle einer Periode der jeweiligen Phasenströme angeordnet sein. Die 2Z unterschiedlichen Abtastwinkel liegen innerhalb eines einzigen Winkelintervalls mit einer Intervallgröße von $\pi/2$, $\pi/3$, $\pi/4$ oder weniger.

Dabei kann dieses Winkelintervall ggf. beliebig innerhalb einer Halbwelle einer Periode und/oder innerhalb einer Periode der jeweiligen Phasenströme angeordnet werden. Durch die Verwendung von Abtastwinkeln, die relativ nah beieinander liegen, kann eine besonders zuverlässige und präzise Eliminierung von Oberwellen bewirkt werden. Somit kann die Güte des ermittelten Schätzwertes für die Grund-Komponente der Phasenströme erhöht werden.

In einem bevorzugten Beispiel für Z = z = 2 (oder für allgemeine ganze Zahlen Z, z) erfolgt eine Abtastung an direkt aufeinander folgenden Abtastwinkeln mit einem Abstandswinkel von jeweils $\pi/12$ (oder allgemein $\pi/6z$). Ein Schätzwert für die Grund-Komponente kann jeweils in einem Abstandswinkel von $\pi/6$ (oder allgemein $\pi/3z$) erfolgen, und zwar auf Basis der letzten vier (oder allgemein 2Z) Abtastwinkel. Es kann somit in einem Abstand von $\pi/6$ (oder allgemein $\pi/3z$) jeweils ein neuer Schätzwert für die Grund-Komponente ermittelt werden. Dieser Schätzwert kann dann jeweils für den Betrieb, insbesondere für die Regelung, des Elektromotors verwendet werden. So kann eine präzise und zeitnahe Einstellung eines Elektromotors ermöglicht werden.

Die Steuereinheit kann ferner eingerichtet sein, die ermittelten Werte der Phasenströme mittels einer Clarke- und/oder Park-Transformation (bzw. mittels einer dq-Transformation) zu transformieren, um transformierte Werte der Phasenströme für die 2Z unterschiedlichen Abtastwinkel zu ermitteln. In diesem Zusammenhang, kann die Steuereinheit eingerichtet sein, die Winkelgeschwindigkeit $\omega_r$ und/oder die Phasenlage des Rotors des Elektromotors zu ermitteln (z.B. mittels ein oder mehrere Sensoren, etwa eines Hall-Sensors).

Die ermittelten Werte der Phasenströme können dann in Abhängigkeit von der Winkelgeschwindigkeit und/oder in Abhängigkeit von der Phasenlage des Rotors des Elektromotors transformiert werden. Die ermittelten Werte der Phasenströme können insbesondere aus einem uvw-Koordinatensystem in das dq-Koordinatensystem transformiert werden.

Außerdem kann die Steuereinheit eingerichtet sein, auf Basis der Summe der transformierten Werte der Phasenströme für die 2Z unterschiedlichen Abtastwinkel einen Schätzwert der Grund-Komponente der Phasenströme zu ermitteln. Die Steuereinheit ist eingerichtet, den Schätzwert der Grund-Komponente der Phasenströme auf Basis des Mittelwertes der transformierten Werte der Phasenströme für die 2Z unterschiedlichen Abtastwinkel zu ermitteln. Dabei kann die Grund-Komponente eine Gleichstrom-Komponente in der transformierten Domäne (insbesondere in dem dq-Koordinatensystem) darstellen. Andererseits kann die Grund-Komponente die Grundwelle der Phasenströme (ohne Oberwellen) in der ursprünglichen Domäne (insbesondere in dem uvw-Koordinatensystem) darstellen.

Alternativ oder ergänzend kann die Steuereinheit eingerichtet sein, eine Summe, insbesondere einen Mittelwert, der Werte der Phasenströme für die 2Z unterschiedlichen Abtastwinkel zu ermitteln. Es kann somit zunächst die Summen- bzw. Mittelwertbildung erfolgen. Die Summe bzw. der Mittelwert wird dann mittels einer Clarke und/oder Park-Transformation transformiert, um den Schätzwert der Grund-Komponente der Phasenströme zu ermitteln. Die Schritte des Transformierens und der Summen- bzw. Mittelwertbildung können somit ggf. in beliebiger Reihenfolge erfolgen.

Es wird somit auf Basis der ermittelten Werte der Phasenströme und mittels einer Clarke- und/oder Park-Transformation ein Schätzwert einer Grund-Komponente der Phasenströme ermittelt.

Der Schätzwerkt der Grund-Komponente kann dabei ein (ggf. mehr- bzw. zwei-dimensionaler) Wert in dem dq-Koordinatensystem sein.

Der Elektromotor kann dann in Abhängigkeit von dem Schätzwert der Grund-Komponente der Phasenströme betrieben werden. Insbesondere können die Phasenspannungen zum Betrieb des Elektromotors in Abhängigkeit von dem Schätzwert der Grund-Komponente der Phasenströme generiert und/oder angepasst werden.

Die Steuereinheit ermöglicht es somit, in effizienter und präziser Weise einen Schätzwert für eine Grund-Komponente (insbesondere für eine Grundwelle) der Phasenströme eines Elektromotors zu ermitteln. Dies ermöglicht die Verwendung von energieeffizienten PWM (Pulsweiten-Modulation) Methoden zur Generierung der Phasenspannungen für den Betrieb eines Elektromotors. Des Weiteren ermöglicht dies eine präzise Einstellung eines Ziel-Drehmoments und/oder einer Ziel-Drehgeschwindigkeit des Elektromotors.

Die Steuereinheit kann eingerichtet sein, einen ersten Wert eines ersten Phasenstroms einer ersten Phase für einen ersten Abtastwinkel zu ermitteln, sowie einen zweiten Wert eines zweiten Phasenstroms einer zweiten Phase für den ersten Abtastwinkel zu ermitteln. Mit anderen Worten, für einen ersten Abtastwinkel können für zumindest zwei Phasen des mehrphasigen Stroms durch den Elektromotor Abtastwerte (d.h. der ersten Werte und der zweite Werte) ermittelt werden. Ein den ersten Wert und den zweiten Wert umfassender Eingangsvektor in dem uvw-Koordinatensystem kann dann mittels der Clarke- und/oder Park-Transformation in das dq-Koordinatensystem transformiert werden, um einen transformierten Wert der d-Koordinate und/oder einen transformierten Wert der q-Koordinate für den ersten Abtastwinkel zu ermitteln.

In entsprechender Weise können transformierte Werte der d-Koordinate und/oder der q-Koordinate für die 2Z unterschiedlichen Abtastwinkel ermittelt werden. Es können dann die Summe bzw. der Mittelwert der 2Z transformierten Werte der d-Koordinate und/oder die Summe bzw. der Mittelwert der 2Z transformierten Werte der $q$-Koordinate ermittelt werden. Des Weiteren kann ein Schätzwert der d-Koordinate der Grund-Komponente der Phasenströme auf Basis der Summe bzw. auf Basis des Mittelwerts der 2Z transformierten Werte der d-Koordinate ermittelt werden. In entsprechender Weise kann ein Schätzwert der q-Koordinate der Grund-Komponente der Phasenströme auf Basis der Summe bzw. auf Basis des Mittelwerts der 2Z transformierten Werte der $q$-Koordinate ermittelt werden.

Alternativ oder ergänzend können, wie oben dargelegt, zunächst die Summe bzw. der Mittelwert der ersten Werte bzw. der zweiten Werte für die unterschiedlichen Abtastwinkel ermittelt werden. Es können dann die Summenwerte bzw. die Mittelwerte für die unterschiedlichen Phase mittels der Clarke- und/oder Park-Transformation aus dem uvw-Koordinatensystem in das dq-Koordinatensystem transformiert werden, um den Schätzwert der d-Koordinate bzw. den Schätzwert der q-Koordinate der Grund-Komponente zu ermitteln.

Der Elektromotor kann dann in besonders präziser und effizienter Weise in Abhängigkeit von dem Schätzwert der d-Koordinate und/oder in Abhängigkeit von dem Schätzwert der q-Koordinate betrieben werden. Dabei kann der Schätzwert der q-Koordinate z.B. dazu verwendet werden, das Drehmoment des Elektromotors einzustellen.

Die Steuereinheit kann eingerichtet sein, den Elektromotor in Abhängigkeit von einem Soll-Wert für die Grund-Komponente der Phasenströme, insbesondere in Abhängigkeit von einer Abweichung bzw. eines Regelfehlers des Schätzwerts der Grund-Komponente der Phasenströme von dem Soll-Wert für die Grund-Komponente der Phasenströme, zu betreiben. Dabei kann der Soll-Wert insbesondere ein Ziel-Drehmoment anzeigen (z.B. als Soll-Wert der q-Koordinate), das durch den Elektromotor zu erbringen ist. Der Elektromotor kann somit derart betrieben werden, dass der Schätzwert der Grund-Komponente der Phasenströme einem Soll-Wert für die Grund-Komponente der Phasenströme entspricht (im dq-Koordinatensystem). So kann ein besonders präziser und robuster Betrieb eines Elektromotors bewirkt werden.

Wie bereits oben dargelegt, kann die Steuereinheit eingerichtet sein, Schaltelemente eines Wechselrichters, insbesondere eines Wechselrichters mit einer Gleichspannung im Zwischenkreis, zu steuern. Dabei kann der Wechselrichter eingerichtet sein, die Phasenspannungen für die unterschiedlichen Phasen bzw. für die unterschiedlichen Windungen des Elektromotors zu generieren. Beispielsweise kann der Wechselrichter mehrere (etwa drei) Halbbrücken aufweisen, die phasenversetzt zueinander betrieben werden, um die unterschiedlichen Phasenspannungen zu generieren.

Es können dann in Abhängigkeit von dem Schätzwert der Grund-Komponente der Phasenströme, insbesondere mittels eines Reglers, Schaltwinkel $\alpha_k$ und/oder Schaltzeitpunkte für die Schaltelemente des Wechselrichters ermittelt werden.

Durch die (wiederholte) Anpassung der Schaltwinkel $\alpha_k$ und/oder Schaltzeitpunkte für die Schaltelemente des Wechselrichters kann ein präziser und robuster Betrieb eines Elektromotors bewirkt werden.

Die Steuereinheit kann eingerichtet sein, in Abhängigkeit von dem Schätzwert der Grund-Komponente der Phasenströme, insbesondere in Abhängigkeit von dem Regelfehler, einen Betriebspunkt des Elektromotors zu ermitteln. Es kann dann in Abhängigkeit von dem ermittelten Betriebspunkt eine Menge von vordefinierten Schaltwinkeln $\alpha_k$ und/oder Schaltzeitpunkten aus einer Vielzahl von unterschiedlichen Mengen von vordefinierten Schaltwinkeln $\alpha_k$ und/oder Schaltzeitpunkten für eine entsprechende Vielzahl von unterschiedlichen Betriebspunkten ausgewählt werden (z.B. aus einer Look-Up Tabelle). Es können somit im Vorfeld für unterschiedliche Betriebspunkte des Elektromotors unterschiedliche Mengen von vordefinierten Schaltwinkeln $\alpha_k$ und/oder Schaltzeitpunkten ermittelt werden, die dann während des Betriebs des Elektromotors in effizienter Weise ausgelesen werden können. So kann ein besonders ressourceneffizienter Betrieb eines Elektromotors ermöglicht werden.

Die Steuereinheit kann eingerichtet sein, die Schaltwinkel $\alpha_k$ und/oder Schaltzeitpunkte in Abhängigkeit von einem Optimierungskriterium zu ermitteln (im Vorfeld zu dem Betrieb des Elektromotors und/oder während des Betriebs des Elektromotors). Dabei kann das Optimierungskriterium von dem Ausmaß an Oberwellen der Phasenströme des Elektromotors abhängen. Insbesondere kann die zu verwendende Menge an Schaltwinkeln $\alpha_k$ und/oder Schaltzeitpunkten derart ermittelt werden, dass das Optimierungskriterium optimiert wird, z.B. derart, dass das Ausmaß an Oberwellen der Phasenströme reduziert, insbesondere minimiert, wird. So kann ein besonders robuster und präziser Betrieb eines Elektromotors ermöglicht werden.

In einem bevorzugten Beispiel kann die Steuereinheit eingerichtet sein, die Schaltwinkel $\alpha_k$ und/oder Schaltzeitpunkte mittels einer Synchronous Optimal Pulsewidth Modulation, SOPWM, Methode zu ermitteln. Dies ermöglicht einen besonders energieeffizienten und robusten Betrieb eines Elektromotors.

Die Steuereinheit kann eingerichtet sein, die Schaltwinkel $\alpha_k$ und/oder Schaltzeitpunkte derart zu ermitteln, dass direkt aufeinander folgende Halbwellen der einzelnen Phasenspannungen halbperiodensymmetrisch zueinander sind bzw. dass die Perioden der der einzelnen Phasenspannungen halbperiodensymmetrisch sind. In diesem Fall wiederholen sich ein Schaltwinkel $\alpha_k$ und/oder ein Schaltzeitpunkt alle $\pi$ bzw. 180° (d.h. $\alpha_k$, $\alpha_k$ + 180°, ...). Des Weiteren können die Schaltwinkel $\alpha_k$ und/oder Schaltzeitpunkte derart zu ermitteln, dass die Perioden der Phasenspannungen viertel- und halbperiodensymmetrisch sind. In diesem Fall wiederholen sich ein Schaltwinkel $\alpha_k$ und/oder ein Schaltzeitpunkt alle $\pi/2$ bzw. 90° (z.B. $\alpha_k$, 180° + $\alpha_k$, 180° - $\alpha_k$ ...). Alternativ oder ergänzend können die Schaltwinkel $\alpha_k$ und/oder Schaltzeitpunkte derart ermittelt werden, dass die Fourier-Reihe der Phasenspannungen nur ungerade Ordnungen bzw.

Oberwellen umfasst. Alternativ oder ergänzend können die Schaltwinkel $\alpha_k$ und/oder Schaltzeitpunkte derart ermittelt werden, dass die Fourier-Reihe der Phasenspannungen keine Ordnungen bzw. Oberwellen umfasst, die ein Vielfaches von drei (der Grund-Frequenz) sind. Die Verwendung von derart strukturierten Phasenspannungen ermöglicht es, in besonders effizienter Weise präzise Schätzwerte der Grund-Komponente der Phasenströme zu ermitteln.

Die Schaltwinkel $\alpha_k$ und/oder Schaltzeitpunkte für eine Periode einer Phasenspannung können derart ermittelt werden, dass die Schaltwinkel $\alpha_k$ und/oder Schaltzeitpunkte für eine erste Halbwelle und für eine zweite Halbewelle der Periode symmetrisch zueinander sind. Dabei kann eine Halbwelle einer Periode jeweils $f$ Schaltwinkel $\alpha_k$ und/oder Schaltzeitpunkte umfassen, wobei $f$ eine ganze Zahl ist, mit $f$ = 0, 1, 2, 3, 4, 5 oder mehr (z.B. $f$ zwischen 3 und 6). $f$ kann die Anzahl der frei wählbaren Schaltwinkel $\alpha_k$ und/oder Schaltzeitpunkte sein. Es können somit mit einer relativ kleinen Anzahl von Schaltvorgängen in energieeffizienter und präziser Weise Phasenspannungen mit einem relativ geringen Oberwellenanteil generiert werden.

Gemäß einem weiteren Aspekt wird ein Verfahren zur Steuerung und/oder Regelung eines Elektromotors beschrieben. Das Verfahren umfasst das Ermitteln von Werten von unterschiedlichen Phasenströmen des Elektromotors für 2Z unterschiedliche Abtastwinkel, wobei Z eine ganze Zahl ist, mit Z gleich eins oder größer als eins. Dabei können ein oder mehrere Paare der 2Z Abtastwinkel jeweils um einen Abstandwinkel von $\pi/6z$ voneinander beabstandet sein, wobei z eine ganze Zahl ist, mit z gleich eins oder größer als eins.

Außerdem kann das Verfahren das Transformieren der ermittelten Werte der Phasenströme mittels einer Clarke- und/oder Park-Transformation umfassen, um transformierte Werte der Phasenströme für die 2Z unterschiedlichen Abtastwinkel zu ermitteln. Des Weiteren kann das Verfahren das Ermitteln eines Schätzwertes einer Grund-Komponente der Phasenströme auf Basis einer Summe der transformierten Werte der Phasenströme für die 2Z unterschiedlichen Abtastwinkel umfassen. Wie bereits oben dargelegt, können alternativ zunächst die Summen der Werte der unterschiedlichen Phasenströme des Elektromotors für die 2Z unterschiedlichen Abtastwinkel ermittelt werden, so dass sich jeweils eine Summe für jeden Phasenstrom ergibt. Die Summen können dann mittels einer Clarke- und/oder Park-Transformation transformiert werden, um einen Schätzwert einer Grund-Komponente der Phasenströme zu ermitteln.

Das Verfahren umfasst ferner das Steuern und/oder Regeln des Elektromotors in Abhängigkeit von dem Schätzwert der Grund-Komponente der Phasenströme.

Gemäß einem weiteren Aspekt wird ein (Straßen-)Kraftfahrzeug (insbesondere ein Personenkraftwagen oder ein Lastkraftwagen oder ein Bus oder ein Motorrad) beschrieben, das die in diesem Dokument beschriebene Steuereinheit umfasst. Des Weiteren umfasst das Kraftfahrzeug einen Elektromotor, der eingerichtet ist, das Kraftfahrzeug anzutreiben.

Gemäß einem weiteren Aspekt wird ein (Luft-)Flugzeug beschrieben, das die in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können.

Im Weiteren wird die Erfindung anhand von Ausführungsbeispielen näher beschrieben. Dabei zeigen

Figur 1a einen beispielhaften Wechselrichter für einen Antriebsmotor eines Fahrzeugs;
Figur 1b einen beispielhaften Verlauf einer Phasenspannung;
Figur 2 beispielhafte Komponenten eines Phasenstroms im dq-Koordinatensystem;
Figur 3 ein Ablaufdiagramm eines beispielhaften Verfahrens zum Betrieb eines Elektromotors.

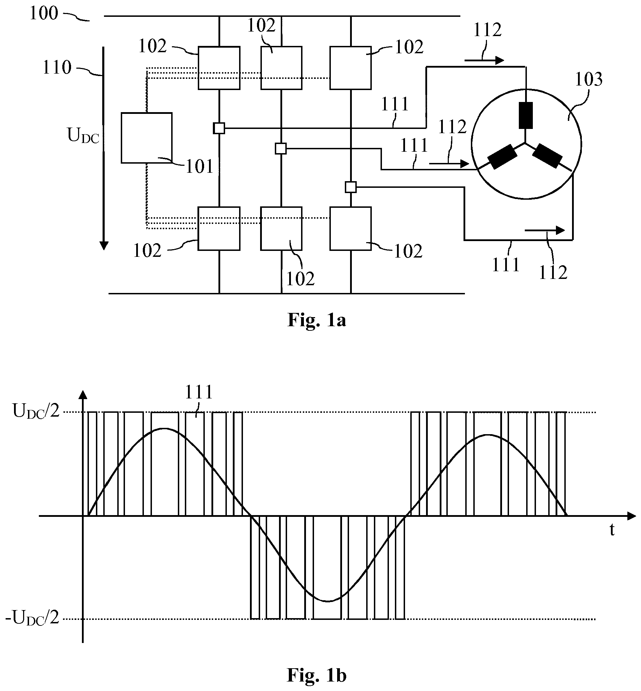

Wie eingangs dargelegt, befasst sich das vorliegende Dokument mit dem effizienten und gleichmäßigen Betrieb eines Elektromotors, insbesondere eines Elektromotors für den Antrieb eines Fahrzeugs. In diesem Zusammenhang zeigt Fig. 1a einen beispielhaften Wechselrichter 100, der eingerichtet ist, auf Basis einer Bordnetzspannung $U_{DC}$ 110 (d.h. einer Gleichspannung) Phasenspannungen 111 (d.h. Wechselspannungen) für die Spulen eines Elektromotors 103 (z.B. eines Fahrzeugs) zu generieren. Der Wechselrichter 100 (bzw. Inverter) umfasst mehrere Schalter bzw. Schaltelement 102, die in dem dargestellten Beispiel für jede Phase jeweils in einer Halbbrücke angeordnet sind. Die Schaltelemente 102 werden durch eine Steuereinheit 101 angesteuert, um die Phasenspannungen 111 für den Elektromotor 103 zu generieren.

Fig. 1b zeigt eine beispielhafte Phasenspannung 111, die durch die Schaltelement 102 einer Halbbrücke generiert werden können. Wie aus Fig. 1b ersichtlich, werden die Schaltelemente 102 mit einem bestimmten Pulsmuster geschaltet (d.h. geöffnet bzw. geschlossen), um eine (sinusförmige) Wechselspannung 111 zu generieren. Das Pulsmuster für einen bestimmten (statischen) Betriebspunkt des Elektromotors 103 kann im Vorfeld ermittelt werden, z.B. mittels eines Optimierungsverfahren wie z.B. SOPWM, durch das ein bestimmtes Optimierungskriterium (z.B. die harmonische Verzerrung der Phasenströme) optimiert, insbesondere minimiert, werden kann. Die ermittelten Pulsmuster für unterschiedliche Betriebspunkte des Elektromotors 103 können abgespeichert werden, z.B. in einer Look-Up Tabelle (LUT). Die einzelnen Pulsmuster weisen dabei für jede Welle bzw. Halbwelle der zu generierenden Wechselspannung jeweils eine bestimmte Anzahl N von Pulsen auf, wobei N eine ganze Zahl ist (z.B. N=1, 2, 3, 4, 5, 6 oder mehr).

Die unterschiedlichen Betriebspunkte des Elektromotors können z.B. unterschiedliche zu stellende Drehmomente und/oder unterschiedliche Drehgeschwindigkeiten umfassen.

Die einzelnen Phasenspannungen 111 für die einzelnen Phasen u, $v$, w eines beispielhaften dreiphasigen Elektromotors 103 können wie folgt beschrieben als Fourier-Reihe werden:

$$u^{uvw}(t) := \sum_{\nu \in H}^{+\infty} \begin{bmatrix} a_\nu \cos(\nu(\omega_r t + \gamma)) \\ a_\nu \cos(\nu(\omega_r t + \gamma - \frac{2\pi}{3})) \\ a_\nu \cos(\nu(\omega_r t + \gamma - \frac{4\pi}{3})) \end{bmatrix}$$

$$+ \sum_{\nu \in H}^{+\infty} \begin{bmatrix} b_\nu \sin(\nu(\omega_r t + \gamma)) \\ b_\nu \sin(\nu(\omega_r t + \gamma - \frac{2\pi}{3})) \\ b_\nu \sin(\nu(\omega_r t + \gamma - \frac{4\pi}{3})) \end{bmatrix}$$

wobei $a_\nu$ und $b_\nu$ die Fourier-Koeffizienten sind, wobei $\upsilon$ die Ordnung einer Harmonischen ist (und von der Phase $v$ zu unterscheiden ist), wobei $\gamma$ der Phasenwinkel ist, wobei $\omega_r$ die Winkelgeschwindigkeit des Elektromotors 103 ist. Der elektrische Winkel $\theta_r$ des Elektromotors 103 beträgt $\theta_r = \omega_r t$.

Wenn angenommen wird, dass die Halbwellen einer Welle bzw. Periode der Phasenspannungen 111 symmetrisch sind, so können die Harmonischen mit gerader Ordnung ausgeschlossen werden. Des Weiteren können Harmonische, die eine durch drei teilbare Ordnung aufweisen, aufgrund der Sternanordnung eines dreiphasigen Elektromotors 103 (bei dem sich die Summe der Phasenspannungen 111 an jedem Zeitpunkt zu einem konstanten Wert addieren) ausgeschlossen werden. Die Menge H von möglichen Ordnungen v kann somit geschrieben werden als H := {1, 5, 7, ... }.

Es kann gezeigt werden, dass zur Bereitstellung von Phasenspannungen 111, die jeweils halbwellensymmetrisch sind, die Fourier-Koeffizienten durch folgende Gleichungen beschrieben werden können

$$a_\nu := \frac{2U_{dc}}{\nu\pi} \sum_{k=1}^{f} (-1)^{k+1} \sin(\nu\alpha_k)$$

$$b_\nu := \frac{2U_{dc}}{\nu\pi} \left[ 1 + \sum_{k=1}^{f} (-1)^k \cos(\nu\alpha_k) \right],$$

wobei $U_{dc}$ die Gleichspannung 110 ist, wobei $f$ die Anzahl von frei wählbaren Schaltwinkeln bzw. Schaltzeitpunkten ist, und wobei $\alpha_k$ die Schaltwinkel sind. Die Anzahl $N$ von Schaltpulsen ergibt sich aus der Anzahl $f$ von frei wählbaren Schaltwinkeln als $N = \frac{2f+2}{2}$ .

Die Phasenströme 112 der induktiven Last (d.h. der Windungen des Stators mit der jeweiligen Induktivität L) des Elektromotors 103 können basierend auf der o.g. Fourier-Reihe für die Phasenspannungen 111 wie folgt geschrieben werden (insbesondere für einen Induktionsmotor oder für eine Permanentmagnet-erregte Synchronmaschine):

$$
\boldsymbol{i}^{uvw}(t) = \frac{1}{\omega_r L} \left( \sum_{\nu \in H}^{+\infty} \begin{bmatrix} (\frac{a_\nu}{\nu} \sin(\nu(\omega_r t + \gamma))) \\ (\frac{a_\nu}{\nu} \sin(\nu(\omega_r t + \gamma - \frac{2\pi}{3}))) \\ (\frac{a_\nu}{\nu} \sin(\nu(\omega_r t + \gamma - \frac{4\pi}{3}))) \end{bmatrix} \right.
$$

$$
\left. - \sum_{\nu \in H}^{+\infty} \begin{bmatrix} (\frac{b_\nu}{\nu} \cos(\nu(\omega_r t + \gamma))) \\ (\frac{b_\nu}{\nu} \cos(\nu(\omega_r t + \gamma - \frac{2\pi}{3}))) \\ (\frac{b_\nu}{\nu} \cos(\nu(\omega_r t + \gamma - \frac{4\pi}{3}))) \end{bmatrix} \right) .
$$

Die Schaltwinkel $\alpha_k$, $k = 1, ..., f$ können derart ermittelt werden, dass ein bestimmtes Optimierungskriterium optimiert wird. Ein beispielhaftes Optimierungskriterium umfasst die gesamte Verzerrung der Phasenströme 112 aufgrund von Oberwellen (die dann zu minimieren ist). Die Schaltwinkel können derart ermittelt werden, dass die Verzerrung der Phasenströme 112 aufgrund von Oberwellen reduziert, insbesondere minimiert, wird. Ein beispielhaftes Optimierungskriterium ist die Verzerrung

$$
d := \frac{I_h^u}{I_{h,six-step}^u} = \frac{\sqrt{\sum_{\nu=6i\pm1}^{+\infty} \frac{a_\nu^2 + b_\nu^2}{\nu^2}}}{\frac{2U_{dc}}{\pi} \sqrt{\sum_{\nu=6i\pm1}^{+\infty} \frac{1}{\nu^4}}},
$$

mit dem Optimierungsproblem

$$
\min_{(\alpha_1,...,\alpha_f) \in [0,\pi]} d
$$

$$
s.t. \qquad \sqrt{a_1^2 + b_1^2} = m \frac{U_{dc}}{2}
$$

$$
0 \leq \alpha_1 \leq \cdots \leq \alpha_f \leq \pi
$$

wobei "s.t." für "unter der Bedingung, dass" steht, und wobei m der Modulationsindex oder die Modulationstiefe ist.

Wie oben dargelegt, ist es für eine präzise Einstellung der Schaltwinkel mittels einer Stromregelung vorteilhaft bzw. erforderlich, die Grundwelle der Phasenströme 112 in präziser Weise zu ermitteln. Über eine Messung können typischerweise nur die mit Harmonischen überlagerten Phasenströme 112 ermittelt werden, die, wie oben dargelegt, jeweils durch eine Fourier-Reihe beschrieben werden können.

Mittels der Clarke-Park-Transformation können die Phasenströme 112 aus dem u v w-Koordinatensystem und das dq-Koordinatensystem überführt werden, und wie folgt dargestellt werden (wobei das hochgesetzte k anzeigt, dass es sich um (zwei dimensionale) Größen aus dem dq-Koordinatensystem handelt),

$$i^k(t) = i_0^k + \sum_{\nu=6i}^{+\infty} i_\nu^k(t) = \begin{bmatrix} i_0^d \\ i_0^q \end{bmatrix} + \sum_{\nu=6i}^{+\infty} \begin{bmatrix} i_\nu^d(t) \\ i_\nu^q(t) \end{bmatrix},$$

mit der DC- bzw. Gleichstrom-Komponente (die der Grundwelle der Phasenströme 112 in dem u $v$ w-Koordinatensystem entspricht)

$$i_0^k := \frac{1}{\omega_r L} \begin{bmatrix} a_1 \sin\gamma - b_1 \cos\gamma \\ -a_1 \cos\gamma - b_1 \sin\gamma \end{bmatrix}$$

und mit den harmonischen Komponenten

$$i_\nu^k(t) := \frac{1}{\omega_r L} \left( \frac{1}{\nu-1} \begin{bmatrix} a_{\nu-1} \sin(\nu\omega_r t + (\nu-1)\gamma) \\ a_{\nu-1} \cos(\nu\omega_r t + (\nu-1)\gamma) \end{bmatrix} \right.$$
$$+ \frac{1}{\nu+1} \begin{bmatrix} a_{\nu+1} \sin(\nu\omega_r t + (\nu+1)\gamma) \\ -a_{\nu+1} \cos(\nu\omega_r t + (\nu+1)\gamma) \end{bmatrix}$$
$$+ \frac{1}{\nu-1} \begin{bmatrix} -b_{\nu-1} \cos(\nu\omega_r t + (\nu-1)\gamma) \\ b_{\nu-1} \sin(\nu\omega_r t + (\nu-1)\gamma) \end{bmatrix}$$
$$\left. + \frac{1}{\nu+1} \begin{bmatrix} -b_{\nu+1} \cos(\nu\omega_r t + (\nu+1)\gamma) \\ -b_{\nu+1} \sin(\nu\omega_r t + (\nu+1)\gamma) \end{bmatrix} \right).$$

Aufgrund der Tatsache, dass die Menge H von möglichen Ordnungen v nur ungerade Ordnung und Ordnungen aufweist, die ein Nichtvielfaches von drei sind, d.h. $H := \{1, 5, 7, ...\}$, weisen die Phasenströme 112 in dem $dq$-Koordinatensystem nur Harmonische mit Ordnungen auf, die ein Vielfaches von sechs sind, d.h. v = 6i.

Aus der Formel für die harmonischen Komponenten der Phasenströme 112 in dem dq-Koordinatensystem ist ersichtlich, dass sich zwei Werte der harmonischen Komponenten mit der Ordnung v = 12i - 6, die mit einem Abstandswinkel von $\Delta\theta_r = {}^\pi/_6$ rad voneinander beabstandet sind, paarweise zu Null addieren,

$$i_{12i-6}^k(\theta_r) + i_{12i-6}^k\left(\theta_r - \frac{\pi}{6}\right) = 0$$
$$i_{12i-6}^k\left(\theta_r - \frac{\pi}{12}\right) + i_{12i-6}^k\left(\theta_r - \frac{\pi}{12} - \frac{\pi}{6}\right) = 0.$$

Des Weiteren kann aus der o.g. Formel für die harmonischen Komponenten der Phasenströme 112 in dem $dq$-Koordinatensystem entnommen werden, dass sich zwei Werte der harmonischen Komponenten mit der Ordnung v = 24i - 12, die mit einem Abstandswinkel von $\Delta\theta_r = {}^\pi/_{12}$ rad voneinander beabstandet sind, paarweise zu Null addieren,

$$i^k_{24i-12}(\theta_r) + i^k_{24i-12}(\theta_r - \frac{\pi}{12}) = 0$$

$$i^k_{24i-12}(\theta_r - \frac{\pi}{6}) + i^k_{24i-12}(\theta_r - \frac{\pi}{6} - \frac{\pi}{12}) = 0$$

Die verbleibenden harmonischen Komponenten mit den Ordnungen v = 24i haben jeweils gleiche Werte in einem relativen Abstand von $\Delta\theta_r = {}^\pi/_{12}$rad zueinander.

Die Phasenströme 112 können somit an den Abtastwinkeln $\theta_r$, $\theta_r$ - ${}^\pi/_{12}$, $\theta_r$-${}^\pi/_6$ und $\theta_r$ - ${}^{3\pi}/_{12}$ abgetastet werden. Aus dem Mittelwert der vier Abtastwerte an diesen vier Abtastwinkelns ergibt sich dann

$$i^k_s(\theta_r) = \frac{i^k(\theta_r) + i^k(\theta_r - \frac{\pi}{12}) + i^k(\theta_r - \frac{\pi}{6}) + i^k(\theta_r - \frac{3\pi}{12})}{4}$$

$$= i^k_0 + \sum_{\nu=24i}^{+\infty} i^k_\nu(\theta_r)$$

Es verbleiben somit nur die Gleichstrom-Komponente $i^k_0$ und die harmonischen Komponenten mit den Ordnungen v = 24i, wobei letztere im Vergleich zu der Gleichstrom-Komponente typischerweise vernachlässigbar sind. Durch die weitere Erhöhung von Abtastpunkten bzw. Abtastwinkeln können weitere Ordnungen der harmonischen Komponenten eliminiert werden. Die Ermittlung von weiteren Abtastwerten führt jedoch typischerweise zu einer Erhöhung der Verzögerung, was sich typischerweise negativ auf die Dynamik der Regelung auswirkt.

Das beschriebene Verfahren zur Ermittlung basiert allein auf Symmetriebetrachtungen der Phasenspannungen 111, und kann somit in flexibler Weise auf unterschiedliche Ansteuermethoden für einen Elektromotor 103 angewendet werden. Des Weiteren ist das beschriebene Verfahren unabhängig von Eigenschaften des Elektromotors 103 und kann daher in flexibler Weise auf unterschiedlich ausgelegte Elektromotoren 103 angewendet werden (ohne dass dafür eine aufwändige Anpassung an den jeweiligen Elektromotor 103 erforderlich ist).

Die Regelung der Phasenströme 112 auf einen bestimmten Zielstrom kann im dq-Koordinatensystem erfolgen. In diesem Fall entspricht der Zielstrom einer Ziel-Gleichstrom-Komponente $i^k_{ref}$. Zur Ermittlung eines Schätzwertes der Ist-Gleichstrom-Komponente $i^k_0$ können an den vier Abtastwinkeln $\theta_r$, $\theta_r$ - ${}^\pi/_{12}$, $\theta_r$ - ${}^\pi/_6$ und $\theta_r$ - ${}^{3\pi}/_{12}$ jeweils zwei der Phasenströme $i^{uvw}(t)$ abgetastet werden. Die jeweiligen Phasenströme $i^{uvw}(t)$ können jeweils über die Clarke-Park-Transformation aus dem uvw-Koordinatensystem in das dq-Koordinatensystem transformiert werden, um die Abtastwerte $i^k(\theta_r)$, $i^k(\theta_r-{}^\pi/_{12})$, $i^k(\theta_r$ - ${}^\pi/_6)$ und $i^k(\theta_r - {}^{3\pi}/_{12})$ zu ermitteln. Diese Abtastwerte können, wie oben dargelegt, gemittelt werden, um einen Schätzwert $i^k_s(\theta_r)$ der Ist-Gleichstrom-Komponente $i^k_0$ zu ermitteln.

Der Regelfehler $i^k_s(\theta_r) - i^k_{ref}$ kann dann in einem Regler (z.B. einem PI Regler), ggf. in Kombination mit einer Vorsteuerung, dazu verwendet werden, um einen Spannungsvektor $u^k_0$ als Stellgröße zu ermitteln, wobei der Spannungsvektor $u^k_0$ einen neuen Betriebspunkt der Last, d.h. des Elektromotors 103, beschreibt. Aus dem Spannungsvektor $u^k_0$ können ein aktueller Modulationsindex $m$ und ein aktueller Phasenwinkel $\theta_U$ ermittelt werden. Aus diesen können über LUTs die aktualisierten Schaltwinkel $\alpha_k$ und/oder ein aktualisierter Phasenwinkel $\gamma$ ermittelt werden. Die aktualisierten Schaltwinkel $\alpha_k$ werden dann zur Ansteuerung der Schaltelemente 102 des Wechselrichters 200 und somit zur Generierung der Phasenspannungen 111 verwendet. So kann z.B. erreicht werden, dass der Elektromotor 103 ein konstantes Drehmoment bereitstellt (durch die Vorgabe eines bestimmten q-Wertes für die Ziel-Gleichstrom-Komponente $i^k_{ref}$).

Das Ermitteln von Abtastwerten kann wiederholt werden, insbesondere periodisch wiederholt werden, um die Generierung der Phasenspannungen 111 wiederholt anzupassen. So kann ein dauerhaft robuster Betrieb eines Elektromotors 103 ermöglicht werden.

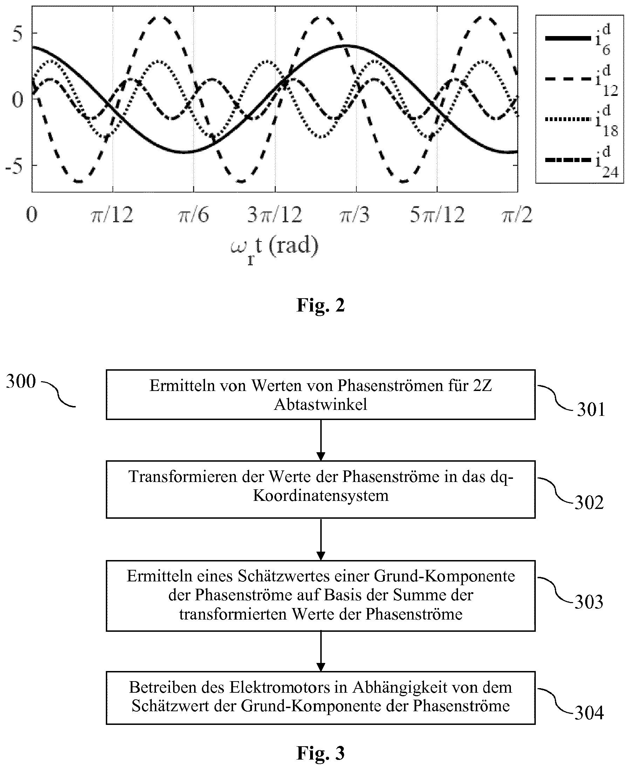

Fig. 3 zeigt ein Ablaufdiagramm eines beispielhaften Verfahrens 300 zur Steuerung und/oder Regelung eines Elektromotors 103. Das Verfahren 300 kann z.B. durch eine Steuereinheit 101 eines Wechselrichters bzw. eines Umrichters 100 ausgeführt werden.

Das Verfahren 300 umfasst das Ermitteln 301 von Werten von unterschiedlichen Phasenströmen 112 des Elektromotors 103 für 2Z unterschiedliche Abtastwinkel, wobei Z eine ganze Zahl ist, mit Z gleich eins oder größer als eins. Es können somit Abtastwerte der unterschiedlichen Phasenströme 112 des Elektromotors 103 (z.B. für zumindest zwei Phasenströme 112 der drei Phasenströme 112 für die unterschiedlichen Phasen u, v, w) ermittelt werden. Die Abtastwerte können für 2Z unterschiedliche Abtastwinkel, d.h. für eine gerade Anzahl von Abtastwinkeln, ermittelt werden. Insbesondere können Abtastwerte für 2, 4, 6 oder mehr Abtastwinkel ermittelt werden.

Dabei können ein oder mehrere Paare der 2Z Abtastwinkel um einen Abstandwinkel von $\pi/_{6z}$ voneinander beabstandet sein, wobei z eine ganze Zahl ist, mit z gleich eins oder größer als eins. Alternativ oder ergänzend können direkt aufeinander folgende Abtastwinkel der 2Z Abtastwinkel um $\pi/_{6z}$ voneinander beabstandet sein. In einem bevorzugten Beispiel ist Z = z. In diesem Fall können z.B. bei Z = 1 die beiden Abtastwinkel um $\pi/_6$ voneinander beabstandet sein. Für Z = 2 können die vier Abtastwinkel jeweils aufeinander folgend um $\pi/12$ voneinander beabstandet sein. Durch die Erhöhung von Z kann die Güte eines ermittelten Schätzwertes für die Grund-Komponente $i_0^k$ der Phasenströme 112 erhöht werden.

Außerdem kann das Verfahren 300 das Transformieren 302 der ermittelten Werte der Phasenströme 112 mittels einer Clarke und/oder Park-Transformation umfassen, um transformierte Werte der Phasenströme 112 für die 2Z unterschiedlichen Abtastwinkel zu ermitteln. Insbesondere können die Werte für einen Abtastzeitpunkt aus dem uvw-Koordinatensystem in das dq-Koordinatensystem transformiert werden. Es können somit 2Z transformierte Abtastwerte für die 2Z unterschiedlichen Abtastwinkel bereitgestellt werden.

Des Weiteren kann das Verfahren 300 das Ermitteln 303 eines Schätzwertes der Grund-Komponente $i_0^k$ der Phasenströme 112 auf Basis der Summe der transformierten Werte der Phasenströme 112 für die 2Z unterschiedlichen Abtastwinkel, insbesondere auf Basis des Mittelwertes der 2Z transformierten Abtastwerte für die 2Z unterschiedlichen Abtastwinkel, umfassen.

Alternativ können zunächst die Summen bzw. Mittelwerte der Werte der unterschiedlichen Phasenströme 112 des Elektromotors 103 für die 2Z unterschiedlichen Abtastwinkel ermittelt werden. Die Summen bzw. Mittelwerte können dann aus dem *uvw*-Koordinatensystem in das dq-Koordinatensystem transformiert werden, um den Schätzwert der Grund-Komponente $i_0^k$ der Phasenströme 112 zu ermitteln.

Es kann somit auf Basis der ermittelten Werte der unterschiedlichen Phasenströme 112 des Elektromotors 103 für die 2Z unterschiedlichen Abtastwinkel und mittels einer Clarke- und/oder Park-Transformation ein Schätzwert der Grund-Komponente $i_0^k$ der Phasenströme 112 ermittelt werden.

Ferner umfasst das Verfahren 300 das Steuern und/oder Regeln 304 des Elektromotors 103 in Abhängigkeit von dem Schätzwert der Grund-Komponente $i_0^k$ der Phasenströme 112. Insbesondere kann die Abweichung des Schätzwertes der Grund-Komponente $i_0^k$ von einem Soll-Wert $i_{ref}^k$ ermittelt werden. Basierend auf dieser Abweichung kann mittels eines (PI-)Reglers ein aktueller Betriebszustand des Elektromotors 103 ermittelt werden. Der aktuelle Betriebszustand kann dazu verwendet werden, eine von dem aktuellen Betriebszustand abhängige Menge von Schaltwinkeln $\alpha_k$ und/oder Schaltzeitpunkten zur Ansteuerung der Schaltelemente 102 des Wechselrichters 100 zu ermitteln (z.B. durch Auswahl einer geeigneten Menge von Schaltwinkeln $\alpha_k$ und/oder Schaltzeitpunkten aus einer LUT). Die Schaltelemente 102 können dann mit der ermittelten Menge von Schaltwinkeln $\alpha_k$ und/oder Schaltzeitpunkten betrieben werden.

Das Verfahren 300 kann wiederholt, insbesondere periodisch, ausgeführt werden (z.B. synchron mit der Drehbewegung der Welle des Elektromotors 103). Beispielsweise kann das Verfahren 300 mit einer Frequenz von 1Hz, 10Hz, 100Hz oder mehr wiederholt werden. So kann ein Elektromotor 103 in effizienter und präziser Weise betrieben werden (z.B. um ein bestimmtes Drehmoment zu stellen).

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

**Patentansprüche**

1. Steuereinheit (101) zum Betrieb eines Elektromotors (103); wobei die Steuereinheit (101) eingerichtet ist,

   - für zumindest zwei unterschiedliche Phasenströme (112) des Elektromotors (103) jeweils Werte für 2Z unterschiedliche Abtastwinkel zu ermitteln, wobei Z eine ganze Zahl ist, mit Z gleich eins oder größer als eins; wobei ein oder mehrere Paare der 2Z Abtastwinkel um einen Abstandwinkel von $\pi/_{6z}$ voneinander beabstandet sind, wobei z eine ganze Zahl ist, mit z gleich eins oder größer als eins; wobei die 2Z unterschiedlichen Abtastwinkel innerhalb eines einzigen Winkelintervalls mit einer Intervallgröße von $\pi/_2$, $\pi/_3$, $\pi/_4$ oder weniger liegen;
   - für jeden Phasenstrom (112) jeweils einen Mittelwert der Werte des jeweiligen Phasenstroms (112) für die 2Z unterschiedlichen Abtastwinkel zu ermitteln;
   - auf Basis der Mittelwerte der Werte der Phasenströme (112) und mittels einer Clarke und/oder Park-Transformation einen Schätzwert einer Grund-Komponente der Phasenströme (112) zu ermitteln; und
   - den Elektromotor (103) in Abhängigkeit von dem Schätzwert der Grund-Komponente der Phasenströme (112) zu betreiben.

2. Steuereinheit (101) zum Betrieb eines Elektromotors (103); wobei die Steuereinheit (101) eingerichtet ist,

   - für zumindest zwei unterschiedliche Phasenströme (112) des Elektromotors (103) jeweils Werte für 2Z unterschiedliche Abtastwinkel zu ermitteln, wobei Z eine ganze Zahl ist, mit Z gleich eins oder größer als eins; wobei ein oder mehrere Paare der 2Z Abtastwinkel um einen Abstandwinkel von $\pi/_{6z}$ voneinander beabstandet sind, wobei z eine ganze Zahl ist, mit z gleich eins oder größer als eins; wobei die 2Z unterschiedlichen Abtastwinkel innerhalb eines einzigen Winkelintervalls mit einer Intervallgröße von $\pi/_2$, $\pi/_3$, $\pi/_4$ oder weniger liegen;
   - die ermittelten Werte der Phasenströme (112) mittels einer Clarke und/oder Park-Transformation zu transformieren, um transformierte Werte der Phasenströme (112) für die 2Z unterschiedlichen Abtastwinkel zu ermitteln;
   - auf Basis eines Mittelwertes der transformierten Werte der Phasenströme (112) für die 2Z unterschiedlichen Abtastwinkel einen Schätzwert der Grund-Komponente der Phasenströme (112) zu ermitteln; und
   - den Elektromotor (103) in Abhängigkeit von dem Schätzwert der Grund-Komponente der Phasenströme (112) zu betreiben.

3. Steuereinheit (101) gemäß einem der vorhergehenden Ansprüche, wobei

   - Z = z; und/oder
   - Z = 2; und/oder
   - das Winkelintervall beliebig innerhalb einer Halbwelle einer Periode oder innerhalb einer Periode der jeweiligen Phasenströme (112) liegt.

4. Steuereinheit (101) gemäß einem der vorhergehenden Ansprüche, wobei die Steuereinheit (101) eingerichtet ist,

   - eine Winkelgeschwindigkeit ($\omega_r$) und/oder einer Phasenlage eines Rotors des Elektromotors (103) zu ermitteln; und
   - die ermittelten Werte der Phasenströme (112) oder davon abgeleitete Werte in Abhängigkeit von der Winkelgeschwindigkeit und/oder in Abhängigkeit von der Phasenlage des Rotors des Elektromotors (103) zu transformieren.

5. Steuereinheit (101) gemäß einem der vorhergehenden Ansprüche, wobei die Steuereinheit (101) eingerichtet ist, den Elektromotor (103) in Abhängigkeit von einem Soll-Wert für die Grund-Komponente der Phasenströme (112), insbesondere in Abhängigkeit von einer Abweichung des Schätzwerts der Grund-Komponente der Phasenströme (112) von dem Soll-Wert für die Grund-Komponente der Phasenströme (112), zu betreiben.

6. Steuereinheit (101) gemäß einem der vorhergehenden Ansprüche, wobei die Steuereinheit (101) eingerichtet ist,

   - Schaltelemente (102) eines Wechselrichters (100), insbesondere eines Wechselrichters (100) mit einer Gleichspannung in einem Zwischenkreis, zu steuern; wobei der Wechselrichter (100) eingerichtet ist, Phasenspannungen (111) für unterschiedliche Phasen des Elektromotors (103) zu generieren; und
   - in Abhängigkeit von dem Schätzwert der Grund-Komponente der Phasenströme (112), insbesondere mittels eines Reglers, Schaltwinkel ($\alpha_k$) und/oder Schaltzeitpunkte für die Schaltelemente (102) des Wechselrichters (100) zu ermitteln.

**7.** Steuereinheit (101) gemäß Anspruch 6, wobei

- die Steuereinheit (101) eingerichtet ist, die Schaltwinkel ($\alpha_k$) und/oder Schaltzeitpunkte in Abhängigkeit von einem Optimierungskriterium zu ermitteln; und
- das Optimierungskriterium von einem Ausmaß an Oberwellen der Phasenströme (112) des Elektromotors (103) abhängt.

**8.** Steuereinheit (101) gemäß einem der Ansprüche 6 bis 7, wobei die Steuereinheit (101) eingerichtet ist, die Schaltwinkel ($\alpha_k$) und/oder Schaltzeitpunkte mittels einer Synchronous Optimal Pulsewidth Modulation, SOPWM, Methode zu ermitteln.

**9.** Steuereinheit (101) gemäß einem der Ansprüche 6 bis 8, wobei die Steuereinheit (101) eingerichtet ist, die Schaltwinkel ($\alpha_k$) und/oder Schaltzeitpunkte derart zu ermitteln, dass

- die einzelnen Phasenspannungen (111) jeweils halbwellen- und/oder viertelwellensymmetrisch sind; und/oder
- eine Fourier-Reihe der Phasenspannungen (111) nur ungerade Ordnungen umfasst; und/oder
- die Fourier-Reihe der Phasenspannungen (111) keine Ordnungen umfasst, die ein Vielfaches von drei sind.

**10.** Steuereinheit (101) gemäß einem der Ansprüche 6 bis 9, wobei

- die Schaltwinkel ($\alpha_k$) und/oder Schaltzeitpunkte für eine Periode einer Phasenspannung (111) derart ermittelt werden, dass die Schaltwinkel ($\alpha_k$) und/oder Schaltzeitpunkte für eine erste Halbwelle und für eine zweite Halbewelle der Periode symmetrisch zueinander sind; und/oder
- eine Halbwelle einer Periode $f$ frei wählbare Schaltwinkel ($\alpha_k$) und/oder Schaltzeitpunkte umfasst, wobei $f$ eine ganze Zahl ist, mit $f$ = 1, 2, 3, 4, 5 oder mehr.

**11.** Steuereinheit (101) gemäß einem der Ansprüche 6 bis 10, wobei die Steuereinheit (101) eingerichtet ist,

- in Abhängigkeit von dem Schätzwert der Grund-Komponente der Phasenströme (112), insbesondere mittels eines Reglers, einen aktuellen Betriebspunkt des Elektromotors (103) zu ermitteln; und
- in Abhängigkeit von dem aktuellen Betriebspunkt eine Menge von vordefinierten Schaltwinkeln ($\alpha_k$) und/oder Schaltzeitpunkten aus einer Vielzahl von unterschiedlichen Mengen von vordefinierten Schaltwinkeln ($\alpha_k$) und/oder Schaltzeitpunkten für eine entsprechende Vielzahl von unterschiedlichen Betriebspunkten auszuwählen.

**12.** Steuereinheit (101) gemäß einem der vorhergehenden Ansprüche, wobei

- Werte von genau zwei oder drei Phasenströmen (112) ermittelt werden; und/oder
- der Elektromotor (103) einen Stator und einen Rotor umfasst; und wobei die unterschiedlichen Phasenströme (112) durch unterschiedliche Windungen des Stators fließen; und/oder
- der Elektromotor (103) ein bürstenloser Gleichstrommotor oder eine Drehstrom-Synchronmaschine oder eine Asynchronmaschine ist.

**13.** Verfahren (300) zur Steuerung und/oder Regelung eines Elektromotors (103); wobei das Verfahren (300) umfasst,

- Ermitteln (301), für zumindest zwei unterschiedliche Phasenströme (112) des Elektromotors (103) jeweils, von Werten für 2Z unterschiedliche Abtastwinkel, wobei Z eine ganze Zahl ist, mit Z gleich eins oder größer als eins; wobei ein oder mehrere Paare der 2Z Abtastwinkel um einen Abstandwinkel von $\pi/_{6z}$ voneinander beabstandet sind, wobei z eine ganze Zahl ist, mit z gleich eins oder größer als eins; wobei die 2Z unterschiedlichen Abtastwinkel innerhalb eines einzigen Winkelintervalls mit einer Intervallgröße von $\pi/_2$, $\pi/_3$, $\pi/_4$ oder weniger liegen;
- Ermitteln, für jeden Phasenstrom (112,) jeweils einen Mittelwert der Werte des jeweiligen Phasenstroms (112) für die 2Z unterschiedlichen Abtastwinkel;
- Ermitteln (303) eines Schätzwertes einer Grund-Komponente der Phasenströme (112) auf Basis der Mittelwerte der Phasenströme (112) für die 2Z unterschiedlichen Abtastwinkel und mittels einer Clarke und/oder Park-Transformation; und
- Steuern und/oder Regeln (304) des Elektromotors (103) in Abhängigkeit von dem Schätzwert der Grund-Komponente der Phasenströme (112).

**14.** Verfahren (300) zur Steuerung und/oder Regelung eines Elektromotors (103); wobei das Verfahren (300) umfasst,

- Ermitteln (301), für zumindest zwei unterschiedliche Phasenströme (112) des Elektromotors (103) jeweils, von Werten für 2Z unterschiedliche Abtastwinkel, wobei Z eine ganze Zahl ist, mit Z gleich eins oder größer als eins; wobei ein oder mehrere Paare der 2Z Abtastwinkel um einen Abstandwinkel von $\pi/_{6z}$ voneinander beabstandet sind, wobei z eine ganze Zahl ist, mit z gleich eins oder größer als eins; wobei die 2Z unterschiedlichen Abtastwinkel innerhalb eines einzigen Winkelintervalls mit einer Intervallgröße von $\pi/_2$, $\pi/_3$, $\pi/_4$ oder weniger liegen;
- Transformieren der ermittelten Werte der Phasenströme (112) mittels einer Clarke und/oder Park-Transformation, um transformierte Werte der Phasenströme (112) für die 2Z unterschiedlichen Abtastwinkel zu ermitteln;
- Ermitteln (303), auf Basis eines Mittelwertes der transformierten Werte der Phasenströme (112) für die 2Z unterschiedlichen Abtastwinkel, eines Schätzwertes der Grund-Komponente der Phasenströme (112); und
- Steuern und/oder Regeln (304) des Elektromotors (103) in Abhängigkeit von dem Schätzwert der Grund-Komponente der Phasenströme (112).

## Claims

**1.** Control unit (101) for operating an electric motor (103); wherein the control unit (101) is designed

- to ascertain, for at least two different phase currents (112) of the electric motor (103) in each case, values for 2Z different scanning angles, wherein Z is an integer, where Z is equal to one or greater than one; wherein one or more pairs of the 2Z scanning angles are spaced apart from one another by a spacing angle of $\pi/_{6z}$, wherein z is an integer, where z is equal to one or greater than one; wherein the 2Z different scanning angles lie within a single angle interval with an interval size of $\pi/_2$, $\pi/_3$, $\pi/_4$ or less;
- to ascertain, for each phase current (112) in each case, a mean of the values of the respective phase current (112) for the 2Z different scanning angles;
- to ascertain, on the basis of the means of the values of the phase currents (112) and by means of a Clarke and/or Park transformation, an estimated value for a fundamental component of the phase currents (112); and
- to operate the electric motor (103) depending on the estimated value of the fundamental component of the phase currents (112).

**2.** Control unit (101) for operating an electric motor (103); wherein the control unit (101) is designed

- to ascertain, for at least two different phase currents (112) of the electric motor (103) in each case, values for 2Z different scanning angles, wherein Z is an integer, where Z is equal to one or greater than one; wherein one or more pairs of the 2Z scanning angles are spaced apart from one another by a spacing angle of $\pi/_{6z}$, wherein z is an integer, where z is equal to one or greater than one; wherein the 2Z different scanning angles lie within a single angle interval with an interval size of $\pi/_2$, $\pi/_3$, $\pi/_4$ or less;
- to transform the ascertained values of the phase currents (112) by means of a Clarke and/or Park transformation in order to ascertain transformed values of the phase currents (112) for the 2Z different scanning angles;
- to ascertain, on the basis of a mean of the transformed values of the phase currents (112) for the 2Z different scanning angles, an estimated value of the fundamental component of the phase currents (112); and
- to operate the electric motor (103) depending on the estimated value of the fundamental component of the phase currents (112).

**3.** Control unit (101) according to either of the preceding claims, wherein

- Z = z; and/or
- Z = 2; and/or
- the angle interval lies anywhere within a half-wave of a period or within a period of the respective phase currents (112).

**4.** Control unit (101) according to one of the preceding claims, wherein the control unit (101) is designed

- to ascertain an angular velocity ($\omega_r$) and/or phase position of a rotor of the electric motor (103); and
- to transform the ascertained values of the phase currents (112) or values derived therefrom depending on the angular velocity and/or depending on the phase position of the rotor of the electric motor (103).

**5.** Control unit (101) according to one of the preceding claims, wherein the control unit (101) is designed to operate the electric motor (103) depending on a target value for the fundamental component of the phase currents (112), in particular depending on a deviation in the estimated value of the fundamental component of the phase currents (112) from the target value for the fundamental component of the phase currents (112).

**6.** Control unit (101) according to one of the preceding claims, wherein the control unit (101) is designed

- to control switching elements (102) of an inverter (100), in particular of an inverter (100) with a DC voltage in an intermediate circuit; wherein the inverter (100) is designed to generate phase voltages (111) for different phases of the electric motor (103); and
- to ascertain, depending on the estimated value of the fundamental component of the phase currents (112), in particular by means of a controller, switching angles ($\alpha_k$) and/or switching times for the switching elements (102) of the inverter (100).

**7.** Control unit (101) according to Claim 6, wherein

- the control unit (101) is designed to ascertain the switching angle ($\alpha_k$) and/or switching times depending on an optimization criterion; and
- the optimization criterion depends on an extent of harmonics of the phase currents (112) of the electric motor (103).

**8.** Control unit (101) according to either of Claims 6 and 7, wherein the control unit (101) is designed to ascertain the switching angle ($\alpha_k$) and/or switching times by means of a Synchronous Optimal Pulsewidth Modulation, SOPWM, method.

**9.** Control unit (101) according to one of Claims 6 to 8, wherein the control unit (101) is designed to ascertain the switching angle ($\alpha_k$) and/or switching times in such a way that

- the individual phase voltages (111) each exhibit half-wave and/or quarter-wave symmetry; and/or
- a Fourier series of the phase voltages (111) comprises only odd orders; and/or
- the Fourier series of the phase voltages (111) does not comprise any orders that are a multiple of three.

**10.** Control unit (101) according to one of Claims 6 to 9, wherein
the switching angles ($\alpha_k$) and/or switching times for a period of a phase voltage (111) are ascertained in such a way that the switching angles ($\alpha_k$) and/or switching times for a first half-wave and for a second half-wave of the period are symmetrical with respect to one another; and/or

- a half-wave of a period $f$ comprises freely selectable switching angles ($\alpha_k$) and/or switching times, wherein $f$ is an integer, where $f$ = 1, 2, 3, 4, 5 or more.

**11.** Control unit (101) according to one of Claims 6 to 10, wherein the control unit (101) is designed

- to ascertain, depending on the estimated value of the fundamental component of the phase currents (112), in particular by means of a controller, a current operating point of the electric motor (103); and
- to select, depending on the current operating point, a quantity of predefined switching angles ($\alpha_k$) and/or switching times from a large number of different quantities of predefined switching angles ($\alpha_k$) and/or switching times for a corresponding large number of different operating points.

**12.** Control unit (101) according to one of the preceding claims, wherein

- values of precisely two or three phase currents (112) are ascertained; and/or
- the electric motor (103) comprises a stator and a rotor; and wherein the different phase currents (112) flow through different turns of the stator; and/or
- the electric motor (103) is a brushless DC motor or a three-phase synchronous machine or an asynchronous machine.

**13.** Method (300) for performing open-loop control and/or closed-loop control on an electric motor (103); wherein the method (300) comprises

- ascertaining (301), for at least two different phase currents (112) of the electric motor (103) in each case, values for 2Z different scanning angles, wherein Z is an integer, where Z is equal to one or greater than one; wherein one or more pairs of the 2Z scanning angles are spaced apart from one another by a spacing angle of $\pi/_{6z}$, wherein z is an integer, where z is equal to one or greater than one; wherein the 2Z different scanning angles lie within a single angle interval with an interval size of $\pi/_2$, $\pi/_3$, $\pi/_4$ or less;
- ascertaining, for each phase current (112) in each case, a mean of the values of the respective phase current (112) for the 2Z different scanning angles;
- ascertaining (303) an estimated value for a fundamental component of the phase currents (112) on the basis of the means of the phase currents (112) for the 2Z different scanning angles and by means of a Clarke and/or Park transformation; and
- performing open-loop control and/or closed-loop control (304) on the electric motor (103) depending on the estimated value of the fundamental component of the phase currents (112).

14. Method (300) for performing open-loop control and/or closed-loop control on an electric motor (103); wherein the method (300) comprises

- ascertaining (301), for at least two different phase currents (112) of the electric motor (103) in each case, values for 2Z different scanning angles, wherein Z is an integer, where Z is equal to one or greater than one; wherein one or more pairs of the 2Z scanning angles are spaced apart from one another by a spacing angle of $\pi/_{6z}$, wherein z is an integer, where z is equal to one or greater than one; wherein the 2Z different scanning angles lie within a single angle interval with an interval size of $\pi/_2$, $\pi/_3$, $\pi/_4$ or less;
- transforming the ascertained values of the phase currents (112) by means of a Clarke and/or Park transformation in order to ascertain transformed values of the phase currents (112) for the 2Z different scanning angles;
- ascertaining (303), on the basis of a mean of the transformed values of the phase currents (112) for the 2Z different scanning angles, an estimated value of the fundamental component of the phase currents (112); and
- performing open-loop control and/or closed-loop control (304) on the electric motor (103) depending on the estimated value of the fundamental component of the phase currents (112).

## Revendications

1. Unité de commande (101) destinée à faire fonctionner un moteur électrique (103) ; l'unité de commande (101) étant conçue pour

   - déterminer des valeurs pour 2Z angles de balayage différents pour au moins deux courants de phase différents (112) du moteur électrique (103), Z étant un entier, Z étant égal ou supérieur à un ; une ou plusieurs paires des 2Z angles de balayage étant espacées les unes des autres d'un angle d'espacement de $\pi/6z$, z étant un entier, z étant égal ou supérieur à un ; les 2Z angles de balayage différents étant dans un intervalle angulaire unique avec une dimension d'intervalle de $\pi/2$, $\pi/3$, $\pi/4$, ou moins ;
   - déterminer une valeur moyenne des valeurs du courant de phase respectif (112) pour les 2Z angles de balayage différents pour chaque courant de phase (112) ;
   - déterminer une valeur estimée d'une composante de base des courants de phase (112) sur la base des valeurs moyennes des valeurs de courant de phase (112) et au moyen d'une transformation de Clarke et/ou de Park ; et
   - faire fonctionner le moteur électrique (103) en fonction de la valeur estimée de la composante de base des courants de phase (112).

2. Unité de commande (101) destinée à faire fonctionner un moteur électrique (103) ; l'unité de commande (101) étant conçue pour

   - déterminer des valeurs pour 2Z angles de balayage différents pour au moins deux courants de phase différents (112) du moteur électrique (103), Z étant un entier, Z étant égal ou supérieur à un ; une ou plusieurs paires des 2Z angles de balayage étant espacées les unes des autres d'un angle d'espacement de $\pi/6z$, z étant un entier, z étant égal ou supérieur à un ; les 2Z angles de balayage différents étant dans un intervalle angulaire unique avec une dimension d'intervalle de $\pi/2$, $\pi/3$, $\pi/4$, ou moins ;
   - transformer les valeurs moyennes déterminées des courants de phase (112) au moyen d'une transformation de Clarke et/ou de Park afin de déterminer des valeurs transformées pour les courant de phase (112) pour les 2Z angles de balayage différents ;
   - déterminer une valeur estimée d'une composante de base des courants de phase (112) sur la base d'une valeur moyenne des valeurs de courant de phase (112) pour les 2Z angles de balayage différents ; et
- faire fonctionner le moteur électrique (103) en fonction de la valeur estimée de la composante de base des courants de phase (112).

3. Unité de commande (101) selon l'une des revendications précédentes,

- Z = z ; et/ou
- Z = 2 ; et/ou
- l'intervalle angulaire étant situé de manière quelconque dans une demi-onde d'une période ou dans une période des courants de phase respectifs (112).

4. Unité de commande (101) selon l'une des revendications précédentes, l'unité de commande (101) étant conçue pour

- déterminer une vitesse angulaire ($\omega_r$) et/ou une position de phase d'un rotor du moteur électrique (103) ; et
- transformer les valeurs déterminées des courants de phase (112) ou des valeurs qui en sont dérivées en fonction de la vitesse angulaire et/ou en fonction de la position de phase du rotor du moteur électrique (103).

5. Unité de commande (101) selon l'une des revendications précédentes, l'unité de commande (101) étant conçue pour faire fonctionner le moteur électrique (103) en fonction d'une valeur de consigne pour la composante de base des courants de phase (112), notamment en fonction d'un écart entre la valeur estimée de la composante de base des courants de phase (112) et la valeur de consigne pour la composante de base des courants de phase (112).

6. Unité de commande (101) selon l'une des revendications précédentes, l'unité de commande (101) étant conçue pour

- commander des éléments de commutation (102) d'un onduleur (100), notamment d'un onduleur (100) avec une tension continue dans un circuit intermédiaire ; l'onduleur (100) étant conçu pour générer des tensions de phase (111) pour différentes phases du moteur électrique (103) ; et
- déterminer des angles de commutation ($\alpha_k$) et/ou des instants de commutation des éléments de commutation (102) de l'onduleur (100) en fonction de la valeur estimée de la composante de base des courants de phase (112), notamment au moyen d'un régulateur.

7. Unité de commande (101) selon la revendication 6,

- l'unité de commande (101) étant conçue pour déterminer l'angle de commutation ($\alpha_k$) et/ou les instants de commutation en fonction d'un critère d'optimisation ; et
- le critère d'optimisation dépendant d'une étendue d'harmoniques des courants de phase (112) du moteur électrique (103).

8. Unité de commande (101) selon l'une des revendications 6 et 7, l'unité de commande (101) étant conçue pour déterminer l'angle de commutation ($\alpha_k$) et/ou les instants de commutation par un procédé de modulation de largeur d'impulsion synchrone optimale, SOPWM.

9. Unité de commande (101) selon l'une des revendications 6 à 8, l'unité de commande (101) étant conçue pour déterminer l'angle de commutation ($\alpha_k$) et/ou les instants de commutation de telle manière que

- les tensions de phase individuelles (111) soient chacune à symétrie demi-onde et/ou quart d'onde ; et/ou
- une série de Fourier des tensions de phase (111) ne comprenne que des ordres impairs ; et/ou
- la série de Fourier des tensions de phase (111) ne comprenne pas d'ordres multiples de trois.

10. Unité de commande (101) selon l'une des revendications 6 à 9,

- les angles de commutation ($\alpha_k$) et/ou les instants de commutation pour une période d'une tension de phase (111) étant déterminés de telle sorte que les angles de commutation ($\alpha_k$) et/ou les instants de commutation pour une première demi-onde et pour une deuxième demi-onde de la période sont symétriques les uns par rapport aux autres ; et/ou
- une demi-onde d'une période $f$ comprenant des angles de commutation ($\alpha_k$) et/ou des instants de commutation librement sélectionnables, $f$ étant un entier avec $f$ = 1, 2, 3, 4, 5 ou plus.

**11.** Unité de commande (101) selon l'une des revendications 6 à 10, l'unité de commande (101) étant conçue pour

- déterminer un point de fonctionnement actuel du moteur électrique (103) en fonction de la valeur estimée de la composante de base des courants de phase (112), notamment au moyen d'un régulateur ; et
- sélectionner, en fonction du point de fonctionnement actuel, un ensemble d'angles de commutation ($\alpha_k$) et/ou d'instants de commutation prédéfinis parmi un grand nombre d'ensembles différents d'angles de commutation ($\alpha_k$) et/ou d'instants de commutation prédéfinis pour un grand nombre correspondant de points de fonctionnement différents.

**12.** Unité de commande (101) selon l'une des revendications précédentes,

- des valeurs d'exactement deux ou trois courants de phase (112) étant déterminées ; et/ou
- le moteur électrique (103) comprenant un stator et un rotor ; et les différents courants de phase (112) circulant à travers différentes spires du stator ; et/ou
- le moteur électrique (103) étant un moteur à courant continu sans balai ou une machine synchrone triphasée ou une machine asynchrone.

**13.** Procédé (300) de commande et/ou de régulation d'un moteur électrique (103) ;
le procédé (300) comprenant les étapes suivantes

- déterminer (301), pour au moins deux courants de phase différents (112) du moteur électrique (103), des valeurs pour 2Z angles de balayage différents, Z étant un entier, Z étant égal ou supérieur à un ; une ou plusieurs paires des 2Z angles de balayage étant espacées les unes des autres d'un angle d'espacement de $\pi/6z$, z étant un entier, z étant égal ou supérieur à un ; les 2Z angles de balayage différents étant dans un intervalle angulaire unique avec une dimension d'intervalle de $\pi/2$, $\pi/3$, $\pi/4$, ou moins ;
- déterminer, pour chaque courant de phase (112), une valeur moyenne des valeurs du courant de phase respectif (112) pour les 2Z angles de balayage différents ;
- déterminer (303) une valeur estimée d'une composante de base des courants de phase (112) sur la base des valeurs moyennes des courants de phase (112) pour les 2Z angles de balayage différents et au moyen d'une Transformation de Clarke et/ou de Park ; et
- commander et/ou réguler (304) le moteur électrique (103) en fonction de la valeur estimée de la composante de base des courants de phase (112).

**14.** Procédé (300) de commande et/ou de régulation d'un moteur électrique (103) ;
le procédé (300) comprenant les étapes suivantes

- déterminer (301) des valeurs pour 2Z angles de balayage différents pour au moins deux courants de phase différents (112) du moteur électrique (103), Z étant un entier, Z étant égal ou supérieur à un ; une ou plusieurs paires des 2Z angles de balayage étant espacées les unes des autres d'un angle d'espacement de $\pi/6z$, z étant un entier, z étant égal ou supérieur à un ; les 2Z angles de balayage différents étant dans un intervalle angulaire unique avec une dimension d'intervalle de $\pi/2$, $\pi/3$, $\pi/4$, ou moins ;
- transformer la valeur moyenne déterminée des courants de phase (112) au moyen d'une transformation de Clarke et/ou de Park afin de déterminer des valeurs transformées pour les courant de phase (112) pour les 2Z angles de balayage différents ;
- déterminer (303) une valeur estimée d'une composante de base des courants de phase (112) sur la base d'une valeur moyenne des valeurs de courant de phase (112) pour les 2Z angles de balayage différents ; et
- commander et/ou réguler (304) le moteur électrique (103) en fonction de la valeur estimée de la composante de base des courants de phase (112).

**Fig. 1a**

**Fig. 1b**

**Fig. 2**

300 ⌇

| Ermitteln von Werten von Phasenströmen für 2Z Abtastwinkel | ⌇ 301 |

↓

| Transformieren der Werte der Phasenströme in das dq-Koordinatensystem | ⌇ 302 |

↓

| Ermitteln eines Schätzwertes einer Grund-Komponente der Phasenströme auf Basis der Summe der transformierten Werte der Phasenströme | ⌇ 303 |

↓

| Betreiben des Elektromotors in Abhängigkeit von dem Schätzwert der Grund-Komponente der Phasenströme | ⌇ 304 |

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20180309399 A1

- DE 112017000892 T5

**In der Beschreibung aufgeführte Nicht-Patentliteratur**

- **YUAN GUOFENG et al.** Multi-Mode PWM Scheme for Locomotive Traction. *International Conference on Electrical Machines and Systems (ICEMS),* 2018, 20181007